# EUROPEAN PATENT APPLICATION

(11) **EP 2 829 344 A1**
(43) Date of publication of application: **28.01.2015**
(21) Application number: 13177481.2
(22) Date of filing: 22.07.2013
(51) Int. Cl.: B23H 1/04, B23H 7/22, B23H 7/26, B23H 11/00, B23H 1/00

(54) **Method for manufacturing and using a work piece, in particular an EDM- (Electrical Discharge Machine) electrode**

(71) Applicant: Merit Precision Tools Limited, VCT110 M-Xewkija (Gozo) (MT)
(72) Inventor: Vella, Charles, Ghasri, Gozo (MT); Merten, Jost, PLA 3000, Paolo, Malta (MT)
(74) Representative: Lippert, Stachow & Partner

(57) **Abstract**

The invention refers to a method for producing and using an EDM- (Electrical Discharge Machine) electrode comprising the steps of providing a holder for holding a blank; providing a blank; clamping said blank in said holder; machining of said blank clamped in the holder, into said EDM electrode at a plurality of machining centers (machines), wherein the holder holding said blank and the machined blank, respectively, is clamped in a chuck of the respective processing center, and wherein said machined blank remains in the holder during all processing steps of said EDM electrode; clamping of said holder, which still clamps said EDM- electrode, in a tool chuck of an EDM center; performing EDM machining, in particular sink EDM machining at a workpiece by said EDM electrode. Furthermore, the invention refers to a holder for implementation of such method. (Fig. 3)

## Description

The invention generally relates to electrical discharge machining (EDM: Electrical Discharge Machine). More practically, the invention relates to a method for manufacturing and using a workpiece, in particular an EDM- (Electrical Discharge Machine) electrode. Further, the invention relates to a holder for holding a blank or a working piece such as an EDM-electrode for implementation of such method.

Electrical discharge machining is widely used to make a variety of metal structures in small volumes. Special shaped electrodes are used to cut complex surfaces into metal blanks or the like. Conventional EDM-electrodes usually have a mirror image of the desired shape of the workpiece to be machined by EDM. By moving the electrode into close proximity to the blank and by applying an electric pulse voltage to the gap arranged between the EDM-electrode and the blank, an electric discharge is caused removing material from the blank. The discharge area is flooded with a dielectric fluid which carries away the eroded material. EDM machining results in the capability of processing metals or alloys without necessity of high cutting force and/or corresponding tools. This leads to cost efficient and less complex machining process with respect to conventional machining tech-Precision of EDM machining strongly depends on precise production of the EDM-electrode. Usually, the EDM-electrode is produced starting from a bar stock, also termed as blank, which is machined in succession by conventional milling, CNC processing, grinding, wire EDM and/or sink EDM for instance. Manufacturing of the EDM-electrode requires high accuracy in positioning the blank, the semi-finished product and the EDM-electrode, respectively in corresponding machining apparatuses used in sequence to produce the EDM-electrode with high shape precision.

Accordingly, clamping of the blank, the semi-finished product and the workpiece, in particular the EDM-electrode, respectively, to subsequent machining centers requires high precision and time consuming alignment of the workpiece with respect to corresponding machining centers.

It is one of the objects of the present invention to facilitate production and usage of workpieces, in particular of EDM-electrodes utilized for electrical discharge machining.

According to one aspect of the invention, a method is provided for manufacturing and using a workpiece, in particular an EDM- (Electrical Discharge Machine) electrode, comprising the steps of: providing a holder for holding a blank; providing a blank; clamping said blank in said holder; machining of said blank clamped in the holder, into said workpiece at a plurality of processing machines, wherein the holder holding said blank and the machined blank, respectively, is clamped in a chuck of the respective processing center, and wherein said machined blank remains in the holder during the processing steps of said workpiece performed by at least two of said processing machines such as a conventional milling center, a CNC center, a wire EDM center, a sink EDM center, a grinding center and/or a polishing center; using said workpiece, in particular using said EDM electrode, for manufacturing of a component. In one embodiment, one of the at least two processing machines is an EDM center. Since the blank and the semi-finished product, respectively, remains in the same holder during the manufacturing process on at least two processing machines, a fixed geometrical position of the respective part (i.e. blank, semi-finished product, respectively) relative to the holder is defined and maintained. Thus, only the holder has to be adjusted in at least two processing centers, whereby the blank, the semi-finished product, respectively, are automatically adjusted with respect to the processing machine. As a result, otherwise necessary time consuming procedures for positioning and aligning at the respective processing machines can be omitted. Such component manufactured by using said workpiece produced by the inventive method can be a product of any kind, in particular a product in the field of automotive industry. Depending on the embodiment, said workpiece may be a tool of a processing machine for manufacturing the component. In another embodiment, said workpiece may be designed as a part of the component. As an example, said workpiece may be processed further by injection moulding of plastic around the workpiece.

According to a second aspect of the invention, a method is provided for producing and using an EDM-electrode comprising the steps of providing a holder for holding a blank; providing a blank; clamping said blank in said holder; machining of said blank clamped in said holder into said EDM-electrode at a plurality of working centers (machines) wherein said holder holding said blank and the machined blank, respectively, is clamped in a chuck of the respective processing machine, and wherein said machined blank remains in the holder during all processing steps of said EDM-electrodes; clamping of said holder, which clamps said EDM-electrode in a tool chuck of an EDM center; performing EDM machining, in particular sink EDM machining by said EDM-electrode.

Since the blank, the semi-finished product and the EDM-electrode, respectively, remain in the same holder during the entire manufacturing process and the usage of the EDM-electrode, a fixed geometrical position of the respective part (i.e. blank, semi-finished product and EDM-electrode, respectively) relative to the holder is defined and maintained. Thus, only the holder has to be adjusted in each processing center, whereby the blank, the semi-finished product and the EDM-electrode, respectively, are automatically adjusted with respect to the processing machine. As a result, otherwise necessary time consuming procedures for positioning and aligning at the respective processing machines can be omitted.

It should be noted that term "tool chuck" used in this application text is to be understood very broadly. On one hand, this term may refer to a common tool chuck comprising a predetermined number of clamping jaws for clamping the object. On the other hand, this term may generally refer to a fastening device for fixing the holder to the respective processing machine, e.g. in the form of a screw adapter or other fastening adapter of the processing center by means of which the holder is attached to the processing head of the respective processing machine. In the same sense, the term "clamping" is to be understood very broadly and correspondingly.

Expediently, the blank and the machined blank, respectively, may be treated at a plurality of processing centers such as a conventional CNC center, a conventional milling center, a wire EDM center, a sink EDM center, a grinding center and/or a polishing center. Accordingly, the inventive method can be conducted by utilization of all known processing centers (i.e. machining centers) for producing and using an EDM-electrode of any kind.

Advantageously, the holder clamping the machined blank may be unclamped from a chuck after completion of a processing step conducted in a corresponding processing center, and then clamped into a chuck of a different processing center in order to conduct different production steps in different processing centers for manufacturing said EDM-electrode.

In order to facilitate positioning of the machined blank and the finished EDM-electrode, respectively in a processing center, the method according to the invention may comprise the provision of a positioning device on the holder. Such positioning device may comprise one or more holes such as bores extending through said holder wherein said bore is sensed by a respective sensing device attached to the respective processing center. As an example, in case of a milling center, said sensing device may comprise a milling probe for probing the at least one positioning hole extending through the holder.

According to the invention, the blank may be fixed at the holder by different methods depending on the shape of the blank, the machined blank and the finished EDM-electrode, respectively as well as on the design of the holder. In a simple configuration, the holder is constructed as a frame comprising several webs or lands forming a central holding fixture for receiving the blank. In case of such construction of the holder, the blank may be clamped between these webs of the holder by means of a plurality of bolts each extending through respective webs or lands.

If the holder is constructed as such a frame, the blank may advantageously be machined on both sides with respect to the major frame surface.

Advantageously, the holder may be adapted to hold not only one single, but a plurality of blanks, machine blanks or EDM-electrodes, respectively, wherein a plurality of blanks is processed in a predetermined processing center, the holder being clamped by a chuck of said predetermined processing center. By conducting such method for producing and using EDM-electrodes, time consuming alignment of blanks, machine blanks or EDM-electrodes with respect to corresponding processing centers can be further decreased because such an alignment step for the plurality of blanks, machine blanks or EDM-electrodes clamped by the holder must only be accomplished once for each processing center. Furthermore, machining of corresponding blanks, machined blanks or EDM-electrodes is further facilitated because said machining of each object may be performed successively.

In a further embodiment, the machining is performed parallel, i.e. corresponding predetermined processing center comprises several tools so that all objects clamped in said holder can be machined simultaneously, further saving production time.

Advantageously, after production of several EDM-electrodes being clamped in the holder, these EDM-electrodes may be used simultaneously for spark erosion applied to a workpiece.

According to a third aspect, the invention considers a holder for holding a blank for implementation of a method according to above-mentioned production methods. Advantageously, said holder may feature a frame-like structure and a plurality of bolts, each extending through a frame section of the holder provided for clamping said blank. Advantageously, the holder is designed so as to comprise a plurality of frame-like structures arranged in line, each adapted to hold a blank, a machined blank or an EDM-electrode, respectively. In order to enable positioning of the holder with respect to a processing machine, the holder may comprise at least one positioning hole or bore extending substantially perpendicular to the main plane of the frame-like structure so that this hole or bore may be sensed by a corresponding sensing device of the processing center.

The invention will hereinafter be explained by describing an embodiment of the invention with reference to the accompanying figures, wherein
- Fig. 1: shows an inventively designed holder 1 holding four semi-finished products 50 on a milling center,
- Fig. 2: shows the holder 1 of figure 1 on a wire EDM center, and
- Fig. 3: shows the holder 1 of figures 1 and 2 on a sink EDM center for usage of the produced EDM electrode being clamped in the holder 1.

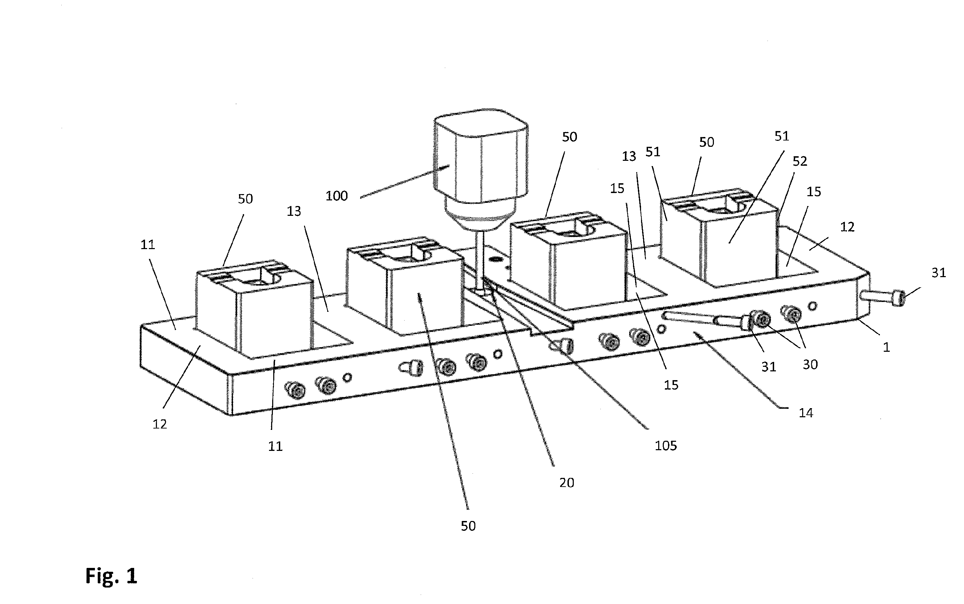

The embodiment described relates to a method for manufacturing and using an EDM- (Electrical Discharge Machine) electrode. Figure 1 illustrates a three dimensional view on a holder 1 to be used for implementation of the inventive method described in the following. In the described embodiment, the holder comprises a frame-like structure with two opposite longitudinal webs or lands 11 as well as transverse webs 12 and intermediate webs 13, both extending perpendicularly to the longitudinal webs 11. The longitudinally spaced webs 12, 13 extending in the transverse direction along with the longitudinal webs 11 form openings or holes 15, which are rectangular-shaped and arranged as respective through openings, resulting in the frame-like structure shown in Fig. 1 comprising four seats each receiving a blank.

At the beginning of the method for production and use of an EDM-electrode, a respective blank is inserted into an associated hole 15 of the holder 1 and is fixed and clamped, respectively, by means of bolts 30, 31.

Fig. 1 shows the parts to be machined being clamped in the holder as semi-finished products 50, i.e. each in a state of an already partly machined blank. In the given embodiment, the blanks as well as the semi-finished products are rectangular, wherein side faces 51 abut against corresponding rectangular inner surfaces defining the respective holes 15. Hereto, two bolts 30, each extending perpendicularly with respect to side surface 14 through a longitudinal web 11 and fixed thereto by corresponding thread, abut against a side surface 51 of the semi-finished product 50, thereby clamping respective blank in respective seat provided by corresponding hole 15. Similarly, respective bolt 31 extends in a diagonal direction with respect to hole 15 through web 11, fixed thereto by corresponding thread, and abuts against edge 52 of the semi-finished product, so that semi-finished product is firmly clamped within the hole 15. For clarity reasons it should be noted that bolts 31 shown in Fig. 1 have different lengths, such that they protrude differently from the frame-shaped holder 1. In all cases, these bolts are turned within the associated thread with the result that the bolts abut against corresponding edges 52 for clamping the respective semi-finished product in the associated hole 15.

In the operating situation of Fig. 1, the holder 1 is clamped to the machine table of the milling machine not explicitly shown in the figure. After clamping of the holder 1 to the milling machine, positioning of the holder and thereby of the semi-finished products 50 is accomplished by sampling the cylindrical inner surface defining the position hole 20 by use of a sensor (probe) 105 fixed to the milling head 100. After positioning, the machine control of the milling head exactly knows the position of all semi-finished products 50 so that they can be machined with pinpoint accuracy thereafter.

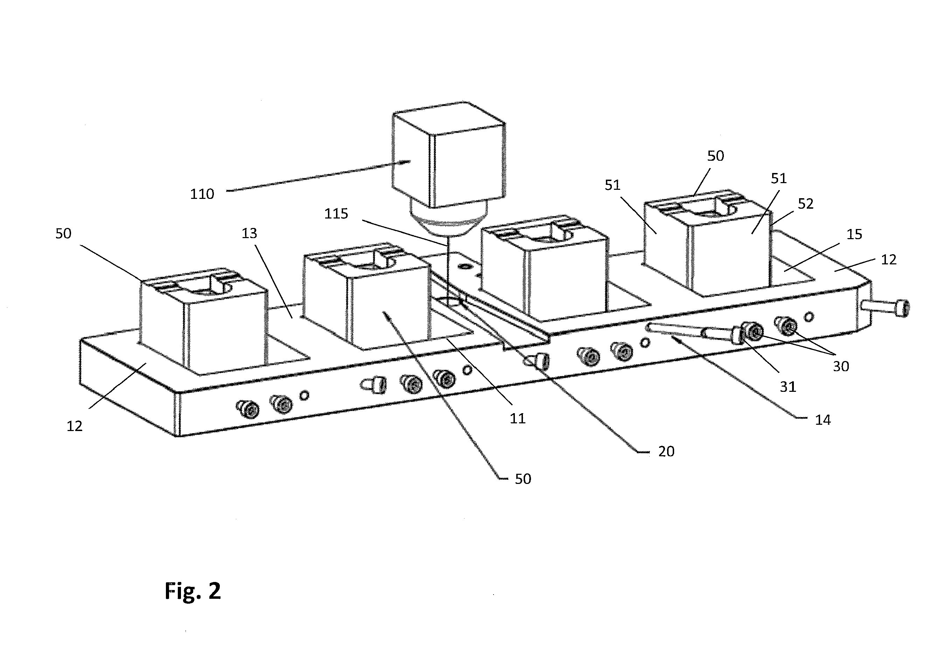

Fig. 2 shows the holder 1 of Fig. 1 in an EDM machine for carrying out wire-spark erosion wherein again the clamping of the holder 1 to the machine table of the processing center is not shown.

An operating situation is shown in which positioning of the holder 1 and thereby of the semi-finished products is accomplished by sampling the cylindrical inner surface defining the position hole 20 by use of a wire sensor (probe) 115 fixed to the EDM head 110 and extending through the positioning hole 20 of the holder 1 parallel to the hole axis.

After positioning, the machine control of the wire EDM head exactly knows the position of all the semi-finished products 50 so that they now can be machined with high accuracy by wire spark erosion.

In the following, an inventive method for producing and using an EDM electrode will be explained. First, a holder, as shown in Figs 1 and 2, is provided. In the embodiment shown, the holder comprises four rectangular recesses or holes 15, each of which adapted to receive a square-shaped blank clamped to the holder 1 by means of bolts 30, 31. In this clamping situation, side faces 51 of the semi-finished products 50 abut against associated internal surfaces of the holes 15.

This way of fixing the blanks to the holder is maintained during the complete production process of the EDM-electrodes as well as during the subsequent usage of the EDM-electrodes in an EDM center.

After clamping the holder 1 in a first processing center, cutting or chip removing processing is applied to the blank. To this end, the holder and the blanks clamped therein are positioned in the processing machine and its processing head as described in Fig. 1. Thus, the respective positions for precisely applying the cutting or chip removing processing on the blanks with respect to the alignment hole 20 are known. These positions remain unchanged during further processing of the blanks and semi-finished products, respectively, so that this fixed positioning of the blanks and semi-finished products, respectively, in relation to the alignment hole can be used for all further processing steps at the different processing centers, i.e. processing machines. By using the method according to the invention, successive processing of blanks or semi-finished products in different processing centers such as CNC centers, conventional milling centers, EDM-centers, grinding or polishing centers is possible at very high accuracy despite the fact that, when one processing step is finished, the holder 1 has to be unclamped from the respective processing center and then again fixed to a different processing center.

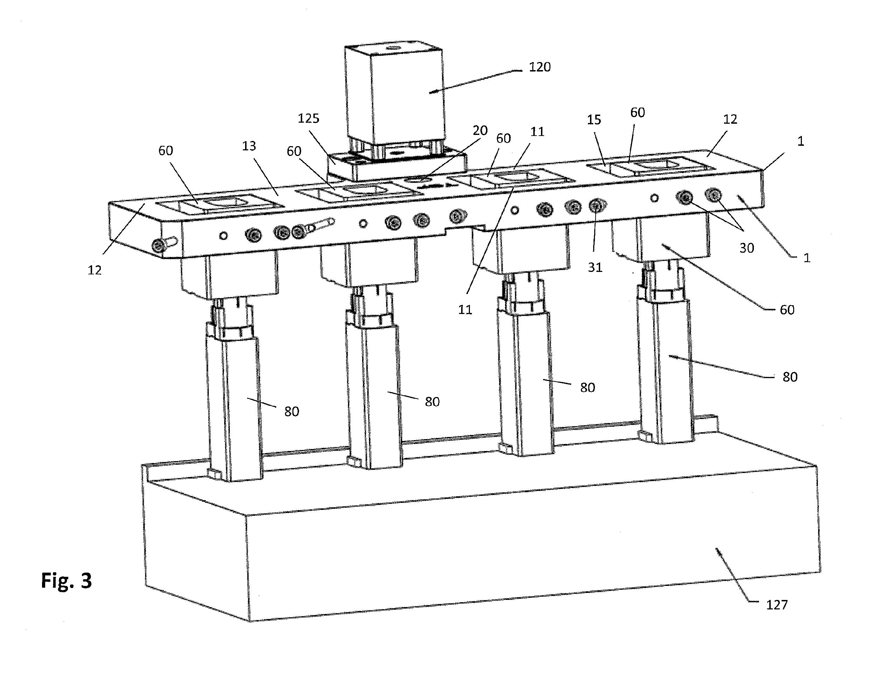

After processing of the EDM-electrodes, these electrodes can be used in an EDM-center for processing workpieces. This is principally described in Fig. 3. The holder 1 is fixed by means of an adapter 125 to a SINK EDM head by screw connections. Since these screw connections extend in a defined way to the alignment hole 20 of the holder, the position of each respective electrode 60 is defined by fixing the holder to the SINK EDM head 120. As shown in Fig. 3, the holder and the EDM-electrodes 60 fixed thereto are turned through 180° along their longitudinal axis in comparison to Fig. 1 and 2. semi-finished products 80 are fixed on the machine table 127 of the sink EDM center in relation to the spaced position of the electrodes 60 clamped in the holder 1. The semi-finished product 80 can be processed by means of the electrodes 60 according to the known electric discharge machining resulting in the finished component. This component can be of any kind, in particular a product in the field of automotive industry. According to the respective embodiments, processing by means of the electrodes clamped in the holder 1 can be conducted simultaneously or subsequently. Since the principles of EDM processing are known to the person skilled in the art, there is no need to describe in detail the provision of the electrodes or the dielectric fluid used between the electrodes 60 and the semi-finished product.

### Reference list

- 1: holder
- 10: frame-like structure
- 11: longitudinal web
- 12: transverse web
- 13: intermediate web
- 14: face
- 15: hole
- 20: positioning/alignment hole
- 25: positioning/alignment groove
- 26: groove phase
- 30, 31: bolt
- 50: semi-finished product
- 51: side face
- 52: edge
- 60: EDM electrode
- 80: semi-finished product
- 100: milling head
- 105: mill head probe
- 110: wire EDM-head
- 115: wire
- 120: Sink-EDM-Head
- 125: adapter
- 127: machine table

## Claims

1. Method for manufacturing and using a workpiece, in particular an EDM- (Electrical Discharge Machine) electrode (60) comprising the steps of:
- providing a holder (1) for holding a blank;
- providing a blank;
- clamping said blank in said holder (1);
- machining of said blank clamped in the holder (1), into said workpiece at a plurality of processing machines, wherein the holder holding said blank and the machined blank, respectively, is clamped in a chuck of the respective processing machine, and wherein said machined blank remains in the holder (1) during the processing steps of said workpiece performed by at least two of said processing machines such as a conventional milling center, a CNC center, a wire EDM center, a sink EDM center, a grinding center and/or a polishing center;
- using said workpiece, in particular using said EDM electrode, for manufacturing of a component.

2. Method according to claim 1, **characterized in that** in the step of machining of said blank clamped in the holder (1) into said workpiece at a plurality of processing machines, wherein the holder (1) holding said blank and the machined blank, respectively, is clamped in a chuck of the respective processing machine, said machined blank remains in the holder during all processing steps of said workpiece, in particular during all processing steps of said EDM electrode (60), performed at said plurality of processing machines.

3. Method according to claim 2, **characterized in that** the step of using said EDM electrode (60) for manufacturing of a component comprises the step of clamping of said holder (1), which still clamps said manufactured EDM-electrode (60), in a tool chuck of an EDM center; and performing EDM machining, in particular sink EDM machining by said EDM electrode in order to manufacture said component.

4. Method according to claim 1, 2 or 3, **characterized in that** the holder clamping the machined blank is unclamped from a chuck after completion of a processing step conducted in a corresponding processing machine, and then clamped into a chuck of a different processing machine.

5. Method according to one of claim 1 to 4, **characterized in that** a positioning device is provided on the holder (1), via which the machined blank and the finished EDM-electrode (60), respectively, is positioned in the respective center.

6. Method according to claim 5, **characterized in that** the positioning is performed by means of at least one hole such as a bore (15) extending through said holder (1), wherein said hole is sensed by a respective sensing device attached to the respective machining center.

7. Method according to one of claims 1 to 6, **characterized in that** said blank is clamped between webs of the holder (1), in particular by means of a plurality of bolts (30, 31) each extending through respective web of the holder.

8. Method according to claim 7, **characterized in that** processing of the blank is performed on both sides with respect to its major frame surface.

9. Method according to one of claims 1 to 8, **characterized in that** said holder is adapted to hold a plurality of blanks, machined blanks or EDM electrodes, respectively, wherein a plurality of blanks is processed in a predetermined processing machine, the holder being clamped by a chuck of said predetermined processing machine.

10. Method according to claim 9, **characterized in that** said plurality of blanks is processed simultaneously in said predetermined processing machine.

11. Method of claim 9, **characterized in that** said plurality of EDM electrodes is simultaneously used for spark erosion applied to a workpiece, the holder being clamped into a tool chuck of said EDM center.

12. Holder for holding a blank for implementation of a method according to any of claims 1 to 11.

13. Holder according to claim 12, **characterized in that** said holder has a frame-like structure, wherein a plurality of bolts (30, 31), each extending through a frame section is provided for clamping said blank.

14. Holder according to claim 12 or 13, **characterized in that** said holder (1) has a plurality of frame-like structures, each adapted to hold a blank, a machined blank and an EDM electrode, respectively.

15. Holder according to claim 13 or 14, **characterized in that** said holder (1) has at least one positioning hole (20) extending substantially perpendicular to the main plane of the frame-like structure.

16. Holder according to one of claims 12 to 15, **characterized by** a plurality of adapter means to be fastened to the holder (1), each constructed for clamping said holder (1) to a respective corresponding machining center.
